# EUROPÄISCHE PATENTSCHRIFT

(11) **EP 1 360 437 B1**
(45) Veröffentlichungstag und Bekanntmachung des Hinweises auf die Patenterteilung: **25.01.2006**
(21) Anmeldenummer: 01993792.9
(22) Anmeldetag: 07.11.2001
(51) Int. Cl.: F17C 13/02

(54) **KENNZEICHNUNG VON AXIALSYMMETRISCHEN METALLBEHÄLTERN MIT TRAGRING MITTELS EINES TRANSPONDERS**
TAGGING OF AXIALLY SYMMETRICAL METAL CONTAINERS WITH A CARRIER RING BY MEANS OF A TRANSPONDER
IDENTIFICATION DE CONTENANTS METALLIQUES A SYMETRIE AXIALE ET DOTES D'UN ANNEAU PORTEUR A L'AIDE D'UN REPONDEUR D'IDENTIFICATION

(30) Priorität: 08.11.2000 DE 20019020 U
(43) Veröffentlichungstag der Anmeldung: 12.11.2003
(73) Patentinhaber: SOKYMAT S.A., 1614 Granges (Veveyse) (CH)
(72) Erfinder: SCHEUERMANN, Frank, 45739 Oer-Erkenschwick (DE); SCHULZE, Siegfried, 47495 Rheinberg (DE)
(74) Vertreter: Besse, François
(86) Internationale Anmeldenummer: PCT/EP2001/012856
(87) Internationale Veröffentlichungsnummer: WO 2002/039011

(56) Entgegenhaltungen:
- EP-A- 0 586 083
- EP-A- 1 011 070
- WO-A-96/20459
- DE-A- 19 510 458
- DE-A- 19 854 862
- DE-C- 19 520 131
- GB-A- 2 346 604

## Beschreibung

### Hintergrund der Erfindung

Die Erfindung betrifft ein Verfahren zur Kennzeichnung von axialsymmetrischen, wie zylindrischen Metallbehältern, wie Druckbehältern für Propangas, mittels eines Transponders. Diese Druckbehälter weisen an der Oberseite einen Tragring auf der im Abstand zur Oberfläche des Metallbehälters gehalten ist.

### Stand der Technik

Ein Verfahren zur Kennzeichnung von im wesentlichen zylindrischen Metallbehältern mittels eines Transponders ist bereits aus der WO 96/20459 bekannt. Dort handelt es sich um Bierfässer, deren Umlauf (wie Füllung, Leerung, Transport, Lagerung) erfaßt werden soll. Zu dem Zweck wird gemäß der Druckschrift zunächst während des Füllens des Fasses in einer Füllstation ein in oder an dem Faß angebrachter Transponder mit einer an der Füllstation angeordneten Sende-/Empfangseinrichtung zwecks, Übertragung von Daten in Wirkverbindung gebracht, um während des oder nach dem Füllen des Fasses Fülldaten, wie das Fülldatum, ein Kennzeichen die eingefüllte Flüssigkeitsart betreffend, hier beispielsweise eine Biersorte, die Füllmenge, eine laufende Füllnummer usw. von der Sende-/Empfangseinrichtung zum Transponder zu übertragen und dann als Datensatz abrufbar in den Transponder zu speichern, um die Daten zu einem späteren Zeitpunkt an anderer Stelle auszulesen und/oder fortschreiben zu können.

Derartige Transponder arbeiten ohne Batterie und speichern ihre informationen digital. Lesestationen, durch die die mit Transponder versehenen Gegenstände während des Materialflusses hindurchlaufen, liefern an die Transponder die Energie, die es möglich macht, aus dem Transponder nicht nur Daten auszulesen, sondern auch Daten in ihm einzuschreiben. Mit den Lesegeräten können Datenauswerteeinrichtungen verbunden sein, in denen die Daten weiterverarbeitet und gespeichert werden können.

Um die Transponder an den Fässern anzubringen, schildert die Druckschrift mehrere Möglichkeiten. Einerseits ist es möglich, den Transponder auf die Oberseite der Fässer zu kleben, andererseits können die Transponder auch, sofern es sich um Polyurethanfässer handelt, in Bohrungen eingebracht werden, die anschließend dann versiegelt werden. Bei neuen Fässern können diese Transponder von vornherein in die Fässer eingebracht sein.

WO96/20459 erläutert, daß ein Transponder aus einem Mikrochip besteht, der mit den Enden einer Spule verbunden ist, wobei Chip und Spule derart umschlossen sind, daß sie gegen Beschädigungen geschützt sind. Ist ein von einer Antenne des Lesegerätes ausgehendes moduliertes RF-Signal (ein Signal mit beispielsweise einer Frequenz von 125 kHz) ausreichend kräftig, kann es einerseits den Mikrochip mit Strom versorgen, andererseits dem Signal aufmodulierte Daten dem Mikrochip zuführen bzw, entsprechende Daten aus ihm herauslesen, letzteres, indem der. Mikrochip veranlaßt wird, seine Daten über ein entsprechendes moduliertes Sendesignal auszustrahlen.

Die von dem Transponder abgestrahlte Energie ist relativ klein, so daß es wichtig ist, die von ihm abgestrahlte-Energie möglichst optimal zur Sende-Empfangs-Antenne des Lesegerätes zu übertragen. Auf Seite 10 der Druckschrift wird darauf verwiesen, daß ein Transponder in dem Schutzring eines Stahlfasses dadurch eingebracht werden kann, daß eine Rundbohrung in dem z. B. aus Stahl bestehenden Ring angeordnet wird, in die ein ebenfalls ringförmiger bzw. scheibenförmiger, mit Kunststoff umkapselter Transponder eingelegt und anschließend beispielsweise verklebt wird. Es wird gesagt, daß durch entsprechende Bemaßung, insbesondere der Abstand des Scheiben- oder Spulenmittelpunktes des Transponders vom Außenrand des Ringes sichergestellt werden kann, daß die Dämpfungswirkung des Schutzringes aus Metall auf die verwendete Radiofrequenz klein genug bleibt, um eine sichere Datenübertragung von dem Lesegerät auf den Transponder zu gewährleisten. Daß auch die Übertragung in umgekehrter Richtung möglich ist, bleibt offen und ist vermutlich aufgrund der hohen Dämpfung bei dieser Montageart nicht sichergestellt.

In der Druckschrift wird dann anschließend ausgeführt, daß dann, wenn es sich bei dem Faß um ein Hotzfaß oder um ein Polyurethanfaß handelt, Materialien,die die RF-Wellen wenig dämpfen, auch ein stiftförmiger Transponder gewählt werden kann, der in ein entsprechendes parallel zur Behälterachse ausgerichtetes Bohrloch eingebracht wird und anschließend dieses Bohrloch dann durch einen Stopfen verschlossen werden kann. Bei einem die Radiofrequenzwelle nicht oder wenig dämpfenden Material, wie Holz oder Polyurethan, ist es gemäß der Druckschrift auch möglich, die Anordnung bezüglich des Schutzringes radial vorzunehmen.

Die Druckschrift läßt den Durchschnittsfachmann vermuten, daß bei Metallfässern die Anordnung von stiftförmigen Transpondern zu keinen vernünftigen Ergebnissen führt, da deren Ausstrahlung zu schwach ist und zu stark von Material des Fasses gedämpft wird.

Es hat sich jedoch gezeigt, daß bei bestimmten Behälterformen und durch bestimmte Maßnahmen erreicht werden kann, daß diese Dämpfungen durch das Metall das Behälters nicht mehr störend in Erscheinung und auch bei Behältern aus z. B. Stahl die Verwendung von stiftförmigen, besonders kleinen und damit auch an geschützten Stellen eines Behälters unterbringbaren Transpondern möglich ist.

Aufgeklebte Transponder, insbesondere solche, die ring- oder scheibenförmig sind, haben nämlich den großen Nachteil, daß sie zum einen leicht beschädigt werden können, zum anderen aber auch aufgrund ihrer deutlich sichtbaren Anbringung und direkten Zugänglichkeit zu Manipulationen verleiten.

### Aufgabe der Erfindung

Aufgabe der Erfindung ist es, ein Verfahren zu schaffen, mit dem ein axialsymmetrischer, wie zylindrischer Metallbehälter, insbesondere Druckbehälter für Propangas, derart durch einen Transponder gekennzeichnet wird, daß diese Nachteile vermieden werden und insbesondere der Transponder so untergebracht wird, daß er zum einen nicht beschädigt werden kann, zum anderen weniger der Gefahr einer Manipulation ausgesetzt ist, und sogar derart angeordnet werden kann, daß sein Vorhandensein überhaupt nicht bemerkt wird.

Ein weiteres Problem liegt darin, daß axialsymmetrische, wie zylindrische Metallbehälter beim Transport in unterschiedlicher Ausrichtung zu der Erfassungsanlage gelangen, was die sichere Erfassung erschwert, da sich je nach Stellung des Trahsponders zu der Erfassungsantenne unterschiedliche Geometrieverhältnisse und damit unterschiedliche Überträgungsverhältnisse ergeben können. Dieses Problem wird von dem Stand der Technik nicht angesprochen.

Eine weitere Aufgabe der Erfindung ist daher die Schaffung eines Verfahrens zur Kennzeichnung von axialsymmetrischen, wie zylindrischen Metallbehältern, bei denen es auf die Winkel-Stellung des Behälters bezüglich der Antenne in der Erfassungsstation nicht ankommt.

### Lösungswege

Gelöst wird die Aufgabe erfindungsgemäß dadurch, daß in den Tragring ein Einschnitt eingebracht wird, der im wesentlichen in Richtung der Radialerstreckung des Tragringes und von der Behälterober seite weggerichtet ist und dass in diesen Einschnitt ein stiftförmiger Transponder derart eingelegt und fixiert wird, daß seine Spulenachse im wesentlichen in Richtung der Radialerstreckung des Tragringes liegt.

Aufgrund dieser Maßnahme wird durch besonders günstige RF-Wellen-Verkopplungs-Vorgänge erreicht, daß zum einen die winkelmäßige Ausrichtung des Metallbehälters bezüglich der über ihm angeordneten Antenne unproblematisch ist, zum anderen auch, daß die von dem Transponder ausgehende Strahlung ausreichend stark bleibt, um von der Antenne aufgenommen zu werden. Dadurch, daß der Transponder in einem Einschnitt eingebracht ist, und nicht auf der Oberfläche des Behälters aufgebracht ist, wird er besser geschützt, sowohl gegen unbeabsichtigte Beschädigungen beim. Handhaben des Behälters als auch gegenüber gewollten Manipulationen. Durch entsprechendes Verschließen und/oder Abdecken des Einschnittes kann in sehr einfacher Weise der Transponder zudem verdeckt und sogar unsichtbar gemacht werden, so daß die Tatsache seines Vorhandenseins verschleiert werden kann, wenn dies zweckmäßig erscheint.

Gemäß einer Weiterbildung des Verfahrens kann bei einem Druckbehälter, an dessen Oberseite ein Tragring mittels drei oder mehr von der Außenwand bzw. Oberseite des Metallbehälters ausgehender Metalistege im Abstand zur Oberseite des Metallbehälters gehalten ist, der Einschnitt im wesentlichen im Bereich eines der Metallstege in dem Tragring eingebracht werden, was den Vorteil hat, daß die durch den Einschnitt bewirkte Schwächung des Tragringes weniger gravierend ist.

Der Tragring kann ein Teilring sein, also unterbrochen sein. Er kann aus massivem Material oder aus einem Hohlprofil bestehen. In beiden Fällen sollte der Einschnitt bis annähernd zur Hälfte des Profils reichen.

Besteht der Tragring aus einem Hohlprofil, wie rohrförmigem Material, wie aus Gewichts- und Materialersparnlsgründen meist der Fall, ist es günstig, wenn der Einschnitt bis in den Hohlraum des Rohrprofils des Tragringes hineinreicht. Dadurch entstehen offensichtlich stärkere elektromagnetische Felder im Bereich des Einschnittes, was die Empfindlichkeit der Anordnung erhöht, sogar soweit, daß optional der Einschnitt mittels einer Metallschicht abgedeckt werden kann, um den Transponder zu schützen.

Die Befestigung kann mittels z. B. eines einklipsbaren Kunststoffteils in dem Einschnitt, und/oder mittels einer aushärtbaren Masse erfolgen.

Die Erfindung betrifft auch einen durch einen Transponder gekennzeichneten axialsymmetrischen zylindrischen Metallbehälter, wie Druckbehälter für Propangas. Dieser Druckbehälter weist an seiner Oberseite einen Tragring auf, der im Abstand zur Oberseite des Metallbehälters gehalten ist. Erfindungsgemäß ist dieser Metallbehälter so ausgestaltet, daß in dem Tragring ein Einschnitt eingebracht ist, der im wesentlichen in Richtung der Radiaterstreckung des Tragringes und von der Behälteroberseite weggerichtet liegt. In diesen Einschnitt ist ein stiftförmiger Transponder derart eingelegt und fixiert, daß die Spulenachse des Transponders im wesentlich in Richtung der Radialerstreckung des Tragringes liegt.

Wird der Tragring mittels (z. B. drei oder mehr) von der Außenseite des Metallbehälters ausgehenden Metalistegen im Abstand zur Oberseite des Metallbehälters gehalten, ist gemäß einer Weiterbildung der Erfindung der Einschnitt im Bereich eines der Metallstäbe vorgesehen. Der Tragring kann ein Teilring sein, also eine Unterbrechung aufweisen. Dei Tragring kann aus Vollmaterial bestehen, oder aus Hohlmaterial. In beiden Fällen sollte der Einschnitt bis annähernd zur Hälfte des Profils reichen. Besteht der Tragring aus Rohrmaterial, ist es günstig, wenn der Einschnitt bis in das Lumen des Querschnitts des Rohrmaterials geführt ist, vorzugsweise bis zur Mitte des Querschnitts. Gemäß noch einer Weiterbildung der Erfindung ist bei dem Metallbehälter der Transponder mittels einer Klipseinrichtung, alternativ oder zusätzlich mittels aushärtbarer Vergußmasse in dem Einschnitt fixiert. Auf den Einschnitt kann anschließend nach der Einbringung des Transponders eine Metallschicht aufgebracht sein, beispielsweise in Form eines aufgeschweißten Bleches oder einer aufgeklebten Metallfolie. Dadurch wird der Transponder gegen Beschädigungen geschützt und optimal den Augen des Benutzers entzogen. Es hat sich als günstig für geringe Dämpfung erwiesen, wenn die Dicke dieser Metallschicht kleiner ist als der Spulenradius.

Als besonders klein und kompakt haben sich stiftförmige Transponder, insbesondere Glastransponder mit Ferritkern bewährt.

### Kurze Beschreibung der Zeichungen

Die Erfindung wird nachfolgend anhand von Ausführungsbeispielen näher erläutert, die in den Zeichnungen dargestellt sind.

Es zeigt:
- **Fig. 1**: in einer perspektivischen Ansicht einen erfindungsgemäß ausgebildeten Druckbehälter für Propangas;
- **Fig. 2**: eine Seitenansicht auf den Tragring eines Behälters gemäß Fig. 1 in vergrößerter Darstellung;
- **Fig. 3**: eine noch weiter vergrößerte Schnittansicht entlang der Linie A-A der Fig. 2 zur Erläuterung der Unterbringung des stiftförmigen Transponders in einem Einschnitt im Tragring;
- **Fig. 4**: ein vergrößerter Axialschnitt durch das Rohr gemäß Fig. 2; und
- **Fig. 5**: schematisch eine Anordnung' zur Erfassung der mit Transponder ausgestatteten Metallbehälter in Aufeinanderfolge.

### Beste Wege der Ausführung der Erfindung

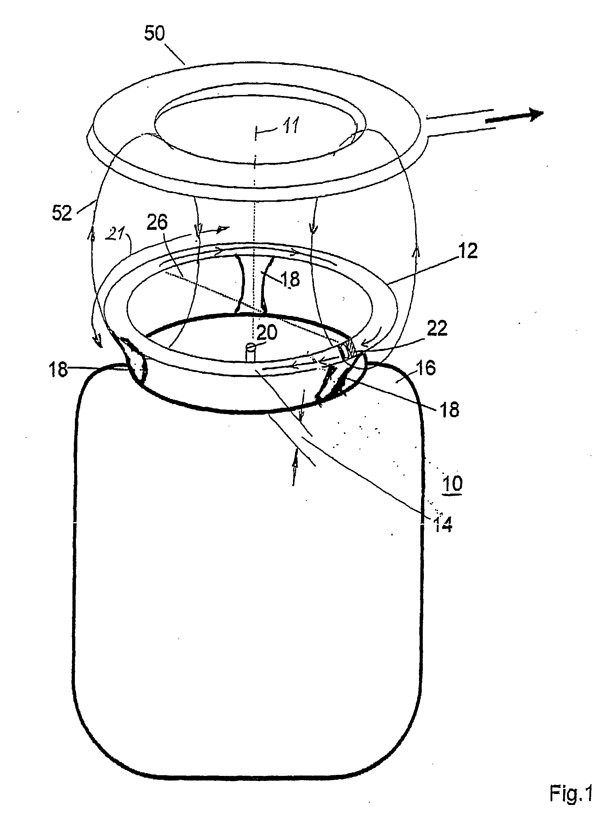

In Fig. 1 ist in einer perspektivischen Ansicht ein zylindrischer Metallbehälter 10, hier in der Form eines Druckbehälters für Propangas dargestellt. Dieser Druckbehälter 10 weist auf seiner Oberseite einen Tragring 12 auf der in einem Abstand 14 zur Oberseite 16 des Metallbehälters 10 gehalten ist, hier mittels dreier von der Außenwand des Metallbehälters ausgehenden aus Metall bestehenden Verbindungsstege 18. Der Abstand des Metallringes sichert eine Durchgriffsmöglichkeit für die Hand und erleichtert somit die Handhabung des Gasbehälters, außerdem schützt der über die Oberfläche vorspringende Metallring das Anschlußventil 20, auf das ein Entnahmeschlauch oder dgl. aufgeschraubt werden kann, vor Beschädigung, beispielsweise dann, wenn mehrere Behälter übereinander gestapelt werden.

Ein Teil 21 des Tragringes 12 kann auch fehlen.

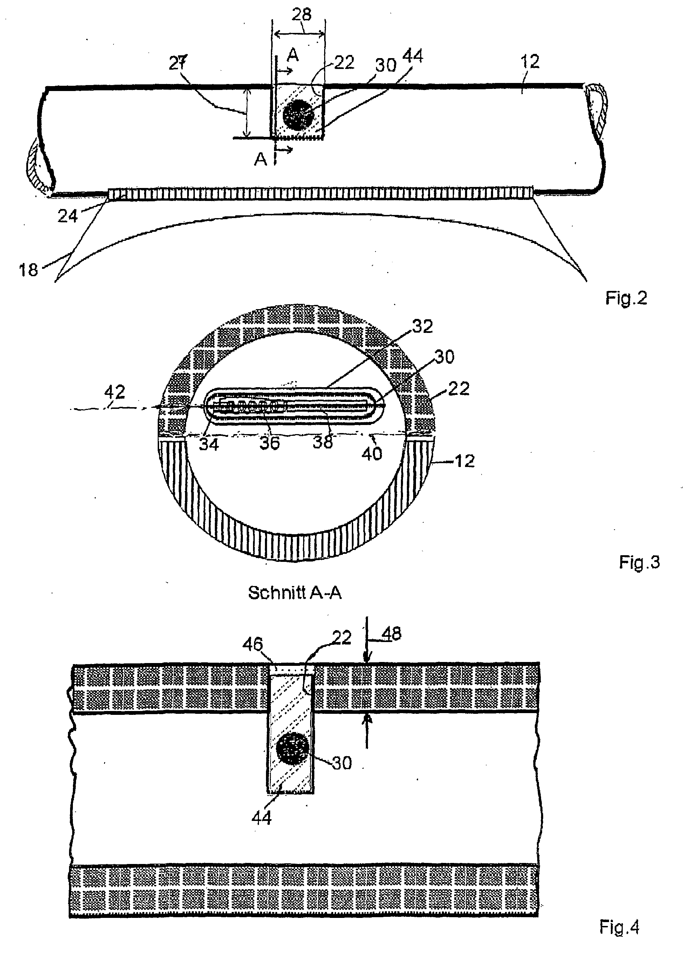

Die Behälter können aus Stahl oder Aluminium sein, und weisen einen Tragring entweder aus Vollmaterial, oder zur Material- und Gewichtseinsparung üblicherweise ein Tragring 12 aus Rohrmaterial auf, so daß der Tragring innen hohl ist. Gemäß Fig. 1 besitzt der Tragring 12 im Bereich eines der Metallstege 18 einen Einschnitt 22, siehe Fig. 2, eine Seitenansicht auf den Tragring 12. Dieser Metallsteg 18 mg mittels Schweißnaht. 24 einerseits am Tragring 12 und andererseits an seinem anderen Ende mit dem Metallbehälter verschweißt sein

In dem rohrförmig dargestellten Tragring 12 ist ein Einschnitt 22 zu erkennen, der hier bis etwa zur Mitte des' Querschnittsprofils reicht, siehe auch Fig. 3, die in vergrößertem Maßstab die Schnittansicht entlang der Linie A-A der Fig. 2 wiedergibt.

Dieser Einschnitt 22 ist im wesentlichen in Richtung der Radialerstreckung 26 des Tragringes 12 (also in Richtung seines Querschnittes) und von der Oberfläche 16 des Behälters weggerichtet angeordnet.

Erfindungsgemäß ist die Tiefe 27 und die Breite 28 des Einschnitts 22 so gewählt, daß ein stiftförmiger Transponder 30 passend aufgenommen werden kann, d. h., derart, daß er mit seinen Längsenden nicht über das Querschnittsprofil des in Fig. 3 erkennbaren Rohrprofils des Tragringes 22 hinausreicht. Der Transponder besteht hier aus einer Glashülle 32, die gasdicht eine um einen magnetisierbaren stabförmigen Kern 34 herumgewickelte Spule 36 umfaßt, deren Enden mit einem Mikroprozessor 38 in an sich bekannter Weise verbunden ist. Dieser Transponder 30 kann in einen in den Einschnitt 22 einklipsbaren Kunststoffkörper 40 aufgenommen sein, alternativ oder zusätzlich ist er mittels aushärtender Vergußmasse an diesem Ort umhüllt und festgehalten, derart, daß die Achse 42 der Spule des Transponders im wesentlichen parallel zur Richtung der Radialerstreckung 26 des Tragringes 12 liegt. Die Masse 44, die den Transponder in dem Einschnitt 22 festhalten soll, wird zweckmäßigerweise so angeordnet, daß sie die Oberfläche des Tragringes 12 glatt fortsetzt.

Der Schlitz 22 kann auch durch eine dünne Metallplatte 46 verschlossen werden, die gemäß der Axialschnittansicht von Fig. 4 den Schlitz mechanisch besonders fest schließt, wobei die Metallschicht 46 eingeschweißt, eingeklebt oder eingelötet sein kann, wobei jedoch die Dicke dieser Schicht 46 deutlich kleiner sein sollte als die Wanddicke 48, damit die Empfindlichkeit der Anordnung nicht leidet. Überraschenderweise wird nämlich durch den Schlitz 22 in dem Tragring 12 trotz der Metallabschirmung des Transponders 30 erreicht, daß von ihm ausgestrahlte elektromagnetische Wellen in einer oberhalb des Tragringes 12 angeordneten Antenne 50, siehe Fig. 1, eine so hohe Signalstärke erzeugt, trotz seiner geringen Leistungskraft, daß eine sichere Erkennung der von ihm ausgegebenen Daten gewährleistet ist. Umgekehrt kann von der Antenne 50 ausgehende elektro-magnetische Strahlung ausreichend Energie an den Transponder 30 liefern, um ihn zu seinen Reaktionen zu veranlassen.

Die durch die besondere Geometrie der beschriebenen erfindungsgemäßen Anordnung erreichbare Empfindlichkeit ist so hoch, daß auch ein Abstand von 10 cm zwischen Antenne und Haltering - bei zueinander paralleler Ring- bzw. Antennenebene - noch eine sichere Übertragung der Daten gewährleistet. Ein derart großer Abstand stellt sicher, daß auch nicht genau positionierte Behälter sicher erkannt werden.

Wie im einzelnen die Verkopplung zwischen Antenne 22 und Transponderspule erfolgt, wird zur Veranschaulichung durch die Verkopplungslinien (Kreise 52) dargestellt, die die Erstreckung von Antenne 50 einerseits und Ring 12 andererseits umkreisen.

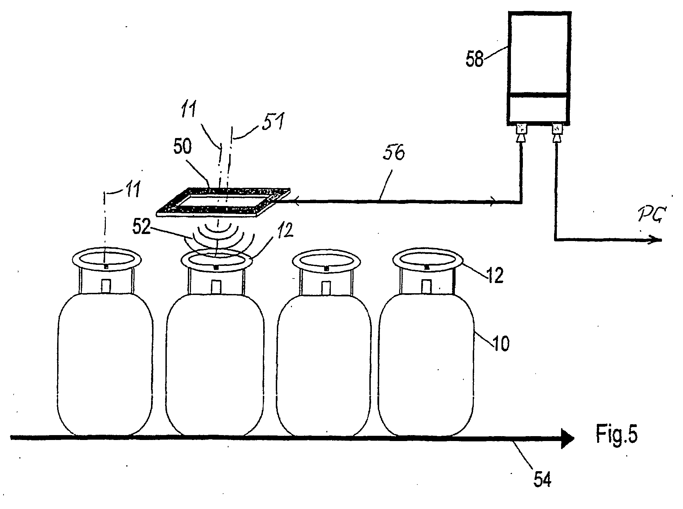

Fig. 5 zeigt schematisch, wie eine Anordnung zur Erfassung von Daten eines Transponders in einem Metallbehälter aufgebaut sein kann. Beispielsweise ist eine Fördereinrichtung 54 vorgesehen, mittels der mit Transponder versehene Behälter 10 aufeinanderfolgend zu einer mit einer Antenne 50 ausgestatteten Erfassungsstation transportiert werden. Die Fördereinrichtung 54 richtet die Behälter lediglich so aus, daß sie mit dem Tragring 12 stets in der gleichen Richtung, z. B. nach oben, in die Erfassungsstation eingebracht werden. Es ist nicht erforderlich, die zylindrischen Behälter 10 in irgendeiner Weise um die Zylinderachse 11 so zu drehen, daß der Transponder eine bestimmte Drehposition besitzt, wenn er unter die Antenne 50 gelangt. Unabhängig von der Position wird nämlich die eingekoppelte Welle 52 der Antenne 50 mit dem Transponder und mit seiner Spule ausreichend eng verkoppelt sein, um ihm genügend Energie zum Betrieb zuzuführen, und ihn außerdem zu veranlassen, seinerseits seine Daten an die Antenne zurückzuschicken. Die Antenne 50, die am günstigsten mit ihrer Achse 51 parallel zur Zylinderachse 11 liegt, ist über eine Leitung 56 mit einer Transponderansteuer- und Leseeinrichtung 58 verbunden, die sowohl die Schreibsignale wie auch die Energiesignale zur Erzeugung der entsprechenden Wellen 52 zur Spule 50 liefert, wie auch von der Spule aufgenommene Signale des Transponders auswertet. Die Einrichtung 58 ist ihrerseits über eine Leitung (serielle Schnittstelle) mit einem PC verbunden, also einer Einrichtung, die die Transponderdaten verarbeitet und speichert beispielsweise in einer zentralen Datenbank. In dieser Datenbank wird dann auch die Erfassung der Behälter z. B. mit Datum, Uhrzeit und Standort ermöglicht.

### Gewerbliche Auswertbarkeit der Erfindung

Die Erfindung ist im Gasbehältervertrieb gewerblich auswertbar.

## Patentansprüche

1. Verfahren zur Kennzeichnung eines axialsymmetrischen, wie zylindrischen Metallbehälters (10), wie Druckbehälter für Propangas, durch einen Transponder (30), wobei dieser Behälter (10) an seiner Oberseite (16) einen Tragring (12) aufweist, der im Abstand (14) von der Oberseite (16) des Behälter (10) gehalten ist, **dadurch gekennzeichnet, dass** in dem Tragring (12) ein Einschnitt (22) eingebracht wird, der im wesentlichen in Richtung der Radialerstreckung (26) des Tragringes (12) und von der Oberseite (16) des Behälters (10) weggerichtet ist und dass in diesen Einschnitt ein stiftförmiger Transponder (30) derart eingelegt und fixiert wird, dass seine Spulenachse (42) im wesentlichen in Richtung der Radialerstreckung (26) des Tragringes (12) liegt.

2. Verfahren nach Anspruch 1, **dadurch gekennzeichnet, dass** der Tragring (12) von Metallstegen (18), die von Aussenwand des Behälters (10) ausgehen, im Abstand zur Oberseite (16) des Metallbehälters gehalten ist und dass der Einschnitt (22) im wesentlichen im Bereich eines der Metallstege (18) eingebracht wird,

3. Verfahren nach Anspruch 1 oder 2, **dadurch gekennzeichnet, dass** der Tragring (12) ein Vollprofil darstellt, in das der Einschnitt (22) eingebracht wird und dass der Einschnitt (22) bis annähernd zur Hälfte des Profils reicht.

4. Verfahren nach Anspruch 1 oder 2, **dadurch gekennzeichnet, dass** der Tragring (12) ein hohles Profil darstellt, in das der Einschnitt (22) eingebracht wird, und dass der Einschnitt (22) bis in den Hohlraum des Profils vorzugsweise bis zur Hälfte des Profils, hineinreicht.

5. Verfahren nach einem der Ausprüche 1 bis 4, **dadurch gekennzeichnet, dass** der Transponder (30) mittels eines einklipsbaren Kunststoffteils in dem Einschnitt (22) befestigt wird.

6. Verfahren nach einem der Ansprüche 1 bis 5, **dadurch gekennzeichnet, dass** der Transponde (30) mittels einer aushärtbaren Masse innerhalb des Einschnitts (22) befestigt wird.

7. Verfahren nach einem der Ansprüche 1 bis 6, **dadurch gekennzeichnet, dass** der Einschnitt (22) nach Einbringung des Transponders (30) mittels einer Metallschicht abgedeckt wird.

8. Durch einen Transponder (30) **gekennzeichnet**er axialsymmetrischer, wie zylindrischer Metallbehälter (10), wie Druckbehälter für Propangas, welcher Druckbehälter (10) an seiner Oberseite (16) einen Tragring (12) aufweist, der im Abstand (14) zur Oberseite (16) des Metallbehälters (10) gehalten ist, **dadurch gekennzeichnet, dass** der Tragring (12) einen Einschnitt (22) aufweist, der im wesentlichen in Richtung der Radialerstreckung (26) des Tragringes (12) und von der Oberseite (16) des Behälters (10) weggerichtet ist und in den ein stiftförmiger Transponder (30) derart eingelegt und fixiert ist, dass die Spulenachse (42) des Transponders (30) im wesentlichen in Richtung der Radialerstreckung (26) des Tragringes (12) liegt.

9. Metallbehälter nach Anspruch 8, **dadurch gekennzeichnet, dass** bei einem Metallhaltering (12) der mittels von der Aussenwand des Metallbehälters (10) ausgehenden Metallstegen (12) im Abstand (14) zur Oberseite (16) gehalten wird der Einschnitt (22) im Bereich eines der Metallstege (18) angeordnet ist.

10. Metallbehälter nach Anspruch 8 oder 9, **dadurch gekennzeichnet, dass** der Tragring (12) aus Vollmaterial besteht und dass der Einschnitt (22) bis annänernd zur Hälfte des Profils reicht.

11. Metallbehälter nach Anspruch 8 oder 9, **dadurch gekennzeichnet, dass** der Tragring (12) aus Rohrmaterial besteht und dass der Einschnitt (22) bis in das Lumen des Querschnitts des Rohrmaterials geführt ist; vorzugsweise bis annähernd zur Mitte des Querschnitts.

12. Metallbehälter nach einem der Ausprüche 8 bis 11 **dadurch gekennzeichnet, dass** der Transponder (30) mittels einer Klipseinrichtung in dem Einschnitt (22) gehalten wird.

13. Metallbehälter nach einem der Ansprüche 8 bis 12 **dadurch gekennzeichnet, dass** der Transponder (30) mittels Vergussmasse fixiert ist.

14. Metallbehälter nach einem der Ansprüche 11 bis 13, **dadurch gekennzeichnet, dass** der Einschnitt (22) mittels einer Metallschicht (46) abgedeckt ist, die dünner als die Wanddicke des Rohrmaterials des Tragringes (12) ist.

15. Metallbehälter nach einem der Ansprüche 8 bis 14, **dadurch gekennzeichnet, dass** der stiftförmige Transponder (30) ein Glastransponder mit Ferritkem ist.

## Claims

1. Method for the tagging of axially symmetric, i.e. cylindrical metal containers (10), such as LPG pressure cylinders, by means of a transponder (30). Said container (10) has been equipped with a carrier ring (12) on the top side (16), held at a distance (14) from the top side (16) of the container (10), **characterised by** an incision (22) into the carrier ring (12), essentially inserted in the direction of the radial extension (26) of the carrier ring (12) and averted from the top side (10) of the container (10), with a pin-shaped transponder (30) being fitted and fixed in the incision with its coil axis (42) essentially in the direction of the radial extension (26) of the carrier ring (12).

2. Method according to claim 1, **characterised in that** the carrier ring (12) is held by metal studs (18) fixed at the exterior wall of the container (10) at the distance to the top side (16) of the metal container and that the incision (22) has essentially been applied around the metal studs (18).

3. Method according to claim 1 or 2, **characterised in that** the carrier ring (12) presents a solid profile into which the incision (22) is applied and that the incision (22) goes approximately up to half-way of the profile.

4. Method according to claim 1 or 2, **characterised in that** the carrier ring (12) presents a hollow profile into which the incision (22) is applied and that the incision (22) goes into the hollow of the profile, preferably as far as half-way down.

5. Method according to one of the claims 1 to 4, **characterised in that** the transponder (30) is fixed in the incision by means of a clipped-in synthetic part.

6. Method according to claims 1 to 5, **characterised in that** the transponder (30) is fixed by means of a sealing compound inside the incision (22).

7. Method according to claims 1 to 6, **characterised in that** the incision (22) is covered with a metal sheet after the insertion of the transponder (30).

8. An axially symmetrical, i.e. cylindrical metal container, such as a LPG pressure cylinder (10), tagged by a transponder. Said pressure cylinder (10) having a carrier ring (12) on the top side (16), held at the distance (14) to the top side (16) of the metal container (10), **characterised by** the carrier ring having an incision (22), essentially in the direction of the radial extension (26) of the carrier ring and averted form the top side (16) of the container (10) and by a pin-shaped transponder (30) being fitted and fixed in such a way that the coil axis (42) of the transponder (30) is essentially positioned in the direction of the radial extension (26) of the carrier ring (12).

9. Metal container according to claim 8, **characterised in that** a metal carrier ring(12), held at a distance (14) from the top side (16) by metal studs (18) protruding from the exterior wall of the metal container(10), the incision (22) has been applied around one of the metal studs(18).

10. Metal container according to claim 8 or 9, **characterised in that** the carrier ring (12) consists of solid material and the incision (22) reaches almost half-way across the profile.

11. Metal container according to claim 8 or 9, **characterised in that** the carrier ring (12) consists of tubing material and the incision (22) is made as far as the lumen of the cross section of the tubing material, preferably reaching almost the middle of the cross section.

12. Metal container according to one of the claims 8 to 11, **characterised in that** the transponder (30) is fixed in the incision (22) by means of a clipped-in device.

13. Metal container according to one of the claims 8 to 12, **characterised in that** the transponder (30) is fixed by means of a sealing compound.

14. Metal container according to one of the claims 11 to 13, **characterised in that** the incision (22) is covered by a metal sheet (46) which is thinner than the thickness of the wall of the tubing material of the carrier ring (12).

15. Metal container according to one of the claims 8 to 14, **characterised in that** the pin-shaped transponder (30) is a glass transponder with a ferrite core.

## Revendications

1. Procédé d'identification de contenants métalliques (10) à symétrie axiale comme par exemple cylindriques, tels que des contenants sous pression pour du gaz propane, au moyen d'un transpondeur (30), lequel contenant (10) présente sur son côté supérieur (16) un anneau porteur (12) qui est maintenu à distance (14) de la surface (16) du contenant métallique (10), **caractérisé en ce que** l'on pratique dans l'anneau porteur (12) une entaille (22) qui est orientée essentiellement dans la direction de l'étendue radiale (26) de l'anneau porteur (12) et à l'écart du côté supérieur (16) du contenant (10) et **en ce que** l'on incorpore et que l'on fixe dans cette entaille un transpondeur en forme de tige (30), de telle sorte que son axe de bobine (42) se trouve essentiellement dans la direction de l'étendue radiale (26) de l'anneau porteur (12).

2. Procédé selon la revendication 1, **caractérisé en ce que** l'anneau porteur (12) est maintenu à distance du côté supérieur (16) du contenant métallique au moyen de pattes métalliques (18), partant de la paroi extérieure du contenant (10), et **en ce que** l'entaille (22) est pratiquée essentiellement dans la région de l'une des pattes métalliques (18).

3. Procédé selon la revendication 1 ou 2, **caractérisé en ce que** l'anneau porteur (12) est constitué par un profilé massif dans lequel est pratiquée l'entaille (22) et **en ce que** l'entaille (22) s'étend jusqu'à environ la moitié du profilé.

4. Procédé selon la revendication 1 ou 2, **caractérisé en ce que** l'anneau porteur (12) est constitué par un profilé creux dans lequel est pratiquée l'entaille (22) et **en ce que** l'entaille (22) s'étend jusque dans l'espace creux du profilé, de préférence jusqu'à la moitié du profilé.

5. Procédé selon l'une quelconque des revendications 1 à 4, **caractérisé en ce que** le transpondeur (30) est fixé dans l'entaille (22) au moyen d'une pièce en plastique enclipsable.

6. Procédé selon l'une quelconque des revendications 1 à 5, **caractérisé en ce que** le transpondeur (30) est fixé à l'intérieur de l'entaille (22) au moyen d'une composition durcissable.

7. Procédé selon l'une quelconque des revendications 1 à 6, **caractérisé en ce que** l'entaille (22) est recouverte d'une couche métallique après l'introduction du transpondeur (30).

8. Contenant métallique à symétrie axiale comme par exemple cylindrique, tel qu'un contenant sous pression pour du gaz propane, identifié par un transpondeur (30), lequel contenant sous pression (10) présente sur son côté supérieur (16) un anneau porteur (12), qui est maintenu à distance (14) du côté supérieur (16) du contenant métallique (10), **caractérisé en ce que** l'anneau porteur (12) présente une entaille (22) qui est orientée essentiellement dans la direction de l'étendue radiale (26) de l'anneau porteur (12) et à l'écart du côté supérieur (16) du contenant (10) dans laquelle on incorpore et on fixe un transpondeur (30) en forme de tige, de telle sorte que l'axe de bobine (42) du transpondeur (30) se trouve essentiellement dans la direction de l'étendue radiale (26) de l'anneau porteur (12).

9. Contenant métallique selon la revendication 8,
**caractérisé en ce que** dans le cas d'un anneau porteur en métal (12) maintenu à distance (14) du côté supérieur (16) au moyen de pattes métalliques (18) partant de la paroi extérieure du contenant métallique (10), l'entaille (22) est disposée dans la région de l'une des pattes métalliques (18).

10. Contenant métallique selon la revendication 8 ou 9, **caractérisé en ce que** l'anneau porteur (12) se compose de matériau massif et **en ce que** l'entaille (22) s'étend jusqu'à environ la moitié du profilé.

11. Contenant métallique selon la revendication 8 ou 9, **caractérisé en ce que** l'anneau porteur (12) se compose de matériau tubulaire et **en ce que** l'entaille (22) est guidée dans la lumière de la section transversale du matériau tubulaire, de préférence jusqu'à environ la moitié de la section transversale.

12. Contenant métallique selon l'une quelconque des revendications 8 à 11, **caractérisé en ce que** le transpondeur (30) est maintenu dans l'entaille (22) au moyen d'un dispositif d'enclipsage.

13. Contenant métallique selon l'une quelconque des revendications 8 à 12, **caractérisé en ce que** le transpondeur (30) est fixé au moyen d'une composition de remplissage.

14. Contenant métallique selon l'une quelconque des revendications 11 à 13, **caractérisé en ce que** l'entaille (22) est recouverte au moyen d'une couche métallique (46), qui est plus mince que l'épaisseur de paroi du matériau tubulaire de l'anneau porteur (12).

15. Contenant métallique selon l'une quelconque des revendications 8 à 14, **caractérisé en ce que** le transpondeur (30) en forme de tige est un transpondeur de verre avec un noyau en ferrite.
